# EUROPEAN PATENT SPECIFICATION

(11) **EP 2 798 933 B1**
(45) Date of publication and mention of the grant of the patent: **11.07.2018**
(21) Application number: 13166510.1
(22) Date of filing: 03.05.2013
(51) Int. Cl.: A01D 34/416

(54) **Vegetation cutting device**
Vorrichtung zum Schneiden von Vegetation
Dispositif de coupe de végétation

(43) Date of publication of application: 05.11.2014
(73) Proprietor: Black & Decker Inc., Newark, Delaware 19711 (US)
(72) Inventor: Bone, Graham, Carrville, Durham DH1 1LY (GB)
(74) Representative: SBD IPAdmin

(56) References cited:
- EP-B1- 1 183 932
- US-A- 4 352 243
- US-A- 4 835 867
- US-A- 5 345 683

## Description

The present invention relates to a vegetation cutting device. In particular the present invention relates to a spool accessory for a cutting line for a vegetation cutting device.

Vegetation cutting devices such as string trimmers are known power operated tools for cutting grass and other foliage and vegetation. Typically string trimmers are powered by petrol or electricity and an engine or motor drives a cutting head. The cutting head can comprise one or more rotating blades, in which case the trimmer is generally known as a brush cutter or one or more rotating cutting lines, in which case it is known as a string trimmer.

A vegetation cutting device such as a string trimmer comprises a rotating cutting head with a cutting line mounted thereto. Rotation of the cutting head causes the cutting line to rotate which defines a cutting swathe. The cutting line rotates and the leading edge of the cutting line impacts and cuts vegetation. During use of a string trimmer the cutting line can break if the line impacts a hard surface or object.

Known string trimmers can comprise a fixed length of cutting line which is fixed with respect to the cutting head. This means if the cutting line breaks, the user must disassemble the cutting head and manually replace the cutting line. Typically the cutting head can have gripper portions or require a tool remove and replace the cutting line. This can be difficult and cumbersome for the user particularly if the cutting head is heavily soiled.

US 5339526 discloses a bump feed vegetation string trimmer. The spool comprises clamp portions for restraining the free ends of the cutting line. This means that the lines do not unwind from the spool when the spool is not rotating. In use the user pushes the button against a hard surface causing a rotor and spool to move axially. This causes a portion of the cutting line to unwind and centrifugal force on the unwound line is greater than the clamping force and the cutting line is fed out.

A problem with US5339526 is the clamp portions are always gripping the cutting line. This means that a manually operated feeding mechanism is required to overcome the clamping force. In addition, the clamp portions are a weak and inefficient way to clamp the line. This means that if the cutting line is slackened slightly before the clamping portions are put in place, the cutting line will unwind from the spool. This will disrupt the feeding mechanism and feed out too much cutting line. In addition by pinching the cutting line at one point the cutting line is more susceptible to being damaged and will break more easily.

Other known string trimmers with automatic cutting line feeding mechanisms are also known. Automatic feeding mechanisms do not require the user to replace the cutting line every time a portion of the cutting line breaks off. One such automatic feeding mechanism is disclosed in EP1183932B. EP1183932B comprises a feed mechanism which feeds cutting line when a portion of the cutting line breaks. The feed mechanism comprises a counterweight which balances the free end of the cutting line when the cutting head rotates. If the cutting line breaks, the counterweight is unbalanced against the centrifugal forces of the shortened free end of the cutting line and the counterweight will move and actuate the feeding mechanism. More cutting line will be fed out until the counterweight is balanced against the cutting line and moves to a position whereby the feeding mechanism stops feeding cutting line.

A problem with this automatic feed mechanism is that the spool accessory requires the user to thread the cutting line through the openings in the cutting head. Threading the cutting line into the cutting head can be difficult for the user.

US4835867 discloses an apparatus for cutting vegetation. This apparatus comprises a hub 36 housing a spool 65 around which cutting line 31 is wound. The hub 36 includes a balance arm 68 arranged to move between locked and released positions depending on whether the hub is rotating, or not. In the locked position, the balance arm locates between the spool and the hub to prevent upward movement and subsequent rotation of the spool. In the released position, the balance arm is retracted so as to enable the spool to move upwardly and then rotate to release more cutting line. The present invention aim to address the aforementioned problems.

According to the present invention there is a spool accessory for a rotatable cutting head of a vegetation cutting device comprising: a spool configured to receive a cutting line wound thereon; and a spool sleeve mounted to the spool, the sleeve comprising a gripping arm moveable between a gripping position and a release position, wherein the gripping arm is configured to move from the gripping position to the release position when the cutting head rotates, and wherein the gripping arm is configured to grip the cutting line wound on the spool when in its gripping position and not to engage the cutting line wound on the spool when in its release position, wherein the spool sleeve comprises a stop member for limiting the maximum movement of the gripping arm towards the periphery of the spool accessory when the spool accessory is rotating.

This means that the gripping arm is constantly gripping the cutting line wound on the spool when the spool accessory is not in use. Under rotation, the gripping arm moves from the gripping position to the release position by virtue of centrifugal force on the gripping arm. The gripping arm grips a greater area of the cutting line wound on the spool compare to a single point on the cutting line. This means that the gripping arm grips more of the cutting line and the cutting line is less likely to unwind. Since the free end does not need to be clamped installing and threading the cutting line on to the vegetation cutting device is easier. This means the gripping arm grip the cutting line over a plurality of locations and does not deform and damage the line by pinching.

Preferably the gripping arm is biased to the gripping position. This means that when the spool accessory is not in use, the gripping arm automatically returns to a gripping position and prevents the cutting line unwinding.

Preferably the spool sleeve is substantially cylindrical and the gripping arm is integral with a wall of the spool sleeve. More preferably the gripping arm is configured to move in a direction perpendicular to an axis of rotation of the spool. This means that all of the centrifugal force acting on the gripping arm is working against the biasing gripping force of the gripping arm. This means the gripping strength of the gripping arm can be optimised against the amount of travel the gripping arm is allowed to undergo. In particular since the centrifugal force is working against the direction of the gripping force of the gripping arm, the gripping strength of the gripping arm can be increased.

Preferably the spool is configured to rotate with respect to the spool sleeve. This means that the spool accessory can be used in conjunction with an automatic feeding mechanism.

Preferably the spool sleeve comprises a sleeve eyelet for receiving the cutting line. In this way the cutting line can be guided from the spool out of the spool accessory in a predetermined direction. This makes installation cutting line easier and improves operation of the feeding mechanism.

Preferably the spool sleeve is configured to be fixed with respect to the rotatable cutting head. Preferably the sleeve comprises mounting tabs for mounting the spool sleeve to the cutting head.

Preferably the spool sleeve comprises at least one resilient gripping arm for engaging a reciprocal upper flange on the spool.

Preferably the when the gripping arm abuts the stop member this corresponds to a minimum speed for cutting vegetation. This means that when the gripping arm abuts the stop, the gripping arm is free from engagement of the cutting line and the cutting head is rotating at a speed for cutting vegetation.

Preferably spool sleeve comprises a spool sleeve counterweight for balancing the gripping arm when the gripping arm abuts the stop member. In this way the spool accessory can be balanced under rotation when the cutting head is rotating at a speed for cutting vegetation.

Preferably the spool sleeve comprises a window for viewing the cutting line wound on the spool.

Preferably the gripping arm is substantially the same width as the distance between an upper and lower flange of the spool. This means that the gripping arm grips multiple portions of the cutting line. Since the gripping arm is the same width as the upper and lower flange of the spool, any cutting line wound on the spool will be gripped when the spool accessory is not rotating. In most cases the cutting line will be gripped at a plurality of points along the cutting line.

Preferably there is a cutting head for a vegetation cutting device comprising the aforementioned spool accessory. Preferably there is a vegetation cutting device comprising the aforementioned spool accessory.

Various other aspects and further embodiments are also described in the following detailed description and in the attached claims with reference to the accompanying drawings, in which:
Figure 1 shows a perspective view of the vegetation cutting device;
Figure 2 shows a perspective view of the cap with an accessory;
Figure 3 shows a plan view of the cap with the accessory;
Figure 3a shows a perspective view of the moveable eyelet and moveable locking mechanism;
Figure 4 shows a plan view of the cap with the accessory;
Figure 5 shows an exploded perspective view of the accessory and the cap;
Figure 6 shows a perspective view of the spool sleeve;
Figures 7 and 8 show perspective views of the spool sleeve in different positions;
Figure 9 shows an underneath plan view of the spool sleeve; and
Figure 10 shows a schematic partial side view of the gripping arm.

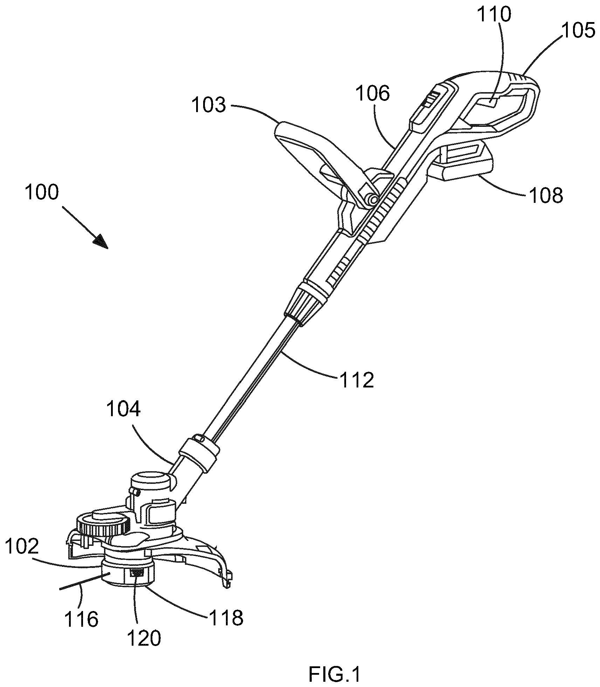

Figure 1 shows a perspective view of a vegetation cutting device or string trimmer 100. Typically the vegetation cutting device 100 is a string trimmer and the term string trimmer will be used hereinafter, but the vegetation cutting device can alternatively be other devices suitable for cutting vegetation. For example the vegetation cutting device can be a lawn mower comprising a cutting line.

In some embodiments the string trimmer 100 comprises a cutting head housing 104 for housing a motor (not shown) and other components. The cutting head housing 104 can comprise two clam shell portions which are fixed together to enclose the motor and other components. A cutting head 102 is rotatably mounted to the cutting head housing 104 and the cutting head 102 connected to the motor via a rotatable drive shaft (not shown). The cutting head comprises a cutting element 116 configured to cut vegetation when the cutting head 102 is rotated. The cutting element 116 in some embodiments is a flexible element or filament and shall be hereinafter referred to as a cutting line 116.

The cutting head housing 104 is connected to a first end of a shaft 112 and a handle housing 106 is connected to a second end the shaft 112. The handle housing 106 comprises a primary handle 103 and a secondary handle 105 mounted on the handle housing 106. The handles 103, 105 are configured so that the user can grip and operate the string trimmer 100. The handle housing 106 can comprises two clam shell portions which are fixed together to enclose circuit boards (not shown). In some alternative embodiments the motor may be housed within the handle housing 106. A battery 108 may be mounted on the handle housing 106 for providing a direct current (DC) voltage to the motor. In some alternative embodiments the string trimmer 100 can be mains powered and the battery 108 is replaced with a power cord (not shown) for providing alternating current (AC) voltage to the motor. The motor is actuated with a trigger switch 110.

The cutting head 102 comprises a cap 118 which is removeable from the cutting head 102 so that the user can install or maintain the cutting string 116. The cap 118 comprises a pair of resilient tabs 120. The resilient tabs 120 are depressible and when the user depresses the resilient tabs 120, the resilient tabs 120 disengage from the cutting head 102 and allow the user to remove the cap 118.

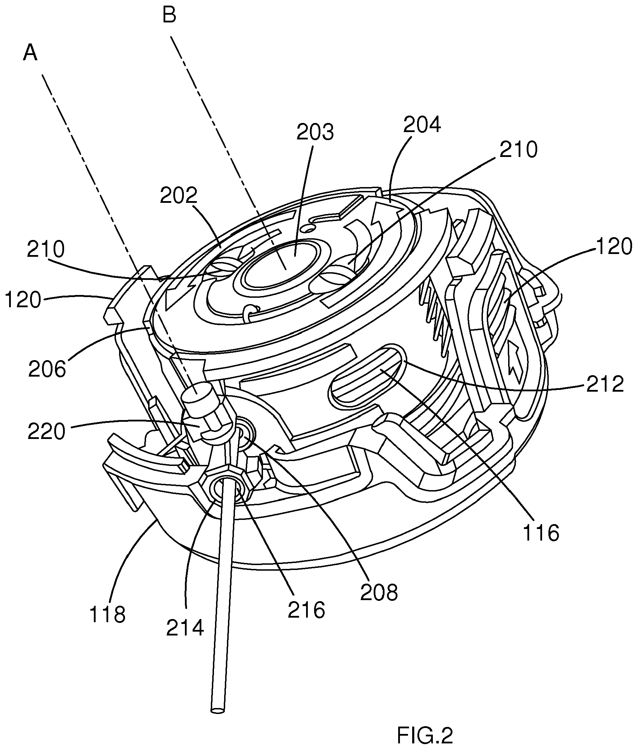

The cap 118 of the cutting head 102 will be described in further detail with respect to Figure 2. Figure 2 shows a perspective view of the cap 118 with a an accessory 202 mounted therein. The accessory 202 is configured to carry and interface with the cutting head 102 to dispense cutting line 116 during use of the string trimmer 100. For the purposes of clarity the accessory 202 will be hereinafter referred to as spool accessory 202. The spool accessory 202 is mounted on a central spindle 203 of the cap 118. The spool accessory 202 comprises a spool 204 on which the cutting line 116 is wound. The spool 204 is rotatably mounted within a spool sleeve 206. The spool sleeve 206 encases the spool 204 and protects the cutting line 116 before the spool accessory 202 is installed in the cutting head 102. A window 212 in the spool sleeve 206 shows the amount of cutting line 116 which is wound on the spool 204. The spool sleeve 206 is configured to be fixedly mounted with respect to the cap 118. When the spool accessory 202 is installed in the cutting head 102, the spool 204 can rotate with respect to the spool sleeve 206 and the cap 118. As the spool 202 rotates cutting line 116 is dispensed from the spool accessory 202.

The free end of the cutting line 116 projects through a spool eyelet 208 mounted in the spool sleeve 206. The spool eyelet 208 is fixed with respect to the spool sleeve 206. When the spool accessory 202 is installed in the cap 118, the spool eyelet 208 ensures that the free end of the cutting line 116 is positioned in a predetermined orientation when the free end of the cutting line 116 is dispensed from the spool 204.

The spool 204 comprises finger recesses 210 for allowing the user to grip the spool 204 and manually rotate the spool 204 when installing the spool accessory 202.

When the free end of the cutting line projects through the spool eyelet 208, the free end of the cutting line 116 also projects though a moveable eyelet 214 mounted at an opening 216 of the cutting head 102. In some embodiments the moveable eyelet 214 is pivotable. Hereinafter the moveable eyelet 214 will be referred to as a pivoting eyelet 214, but the moveable eyelet may be configured to move in other ways. For example the moveable eyelet 214 may be configured to slide with respect to the cap 118.

The spool eyelet 208 deflects the cutting line 116 such that the cutting line 116 is aligned or substantially aligned with the longitudinal axis of the bore of the pivoting eyelet 214. This means that the cutting line 116 does not exert a turning moment on the pivoting eyelet 214 from the cutting line deviating through an angle from the point the cutting line leaves the spool 204 to the pivoting eyelet 214. Instead the second eyelet 208 deflects the cutting line 116 between the point the cutting line leaves the spool 204 and the pivoting eyelet 214. This means that the cutting line 116 inside the cutting head 102 will not cause the pivoting eyelet 214 to move.

The pivoting eyelet 214 is configured to actuate a moveable locking mechanism 220. In some embodiments the pivoting eyelet 214 is mechanically coupled to the moveable locking mechanism 220 and linkages (not shown) cause the moveable locking mechanism 220 to move when the pivoting eyelet 214 moves. In some other embodiments, the pivoting eyelet 214 is integral with the moveable locking mechanism 220.

The cutting line 116 exits the cutting head 102 at the opening 216 and projects therefrom. The projecting free end of the cutting line 116 sweeps through a plane and defines a cutting swathe when the cutting head 102 rotates. The pivoting eyelet 214 is configured to pivot about an axis A which is parallel or substantially parallel to the axis of rotation B of the cutting head 102. In some embodiments the pivoting eyelet is configured to move in the plane of the cutting swathe. The plane of the cutting swathe is perpendicular or substantially perpendicular to the axis of rotation B.

The pivoting eyelet 214 is configured to pivot when a force is exerted on the free end of the cutting line 116. For example, when a force is exerted on the cutting line 116 in the plane of the cutting swathe, the cutting line 116 will exert a force on the inside wall of the pivoting eyelet 214 and this will cause the pivoting eyelet 214 to rotate. In some embodiments, the pivoting eyelet 214 is configured to rotate when a force on the free end of the cutting line 116 exceeds a predetermined threshold force. In some embodiments the pivoting eyelet 214 is configured to rotate when any force is exerted on the free end of the cutting line 116.

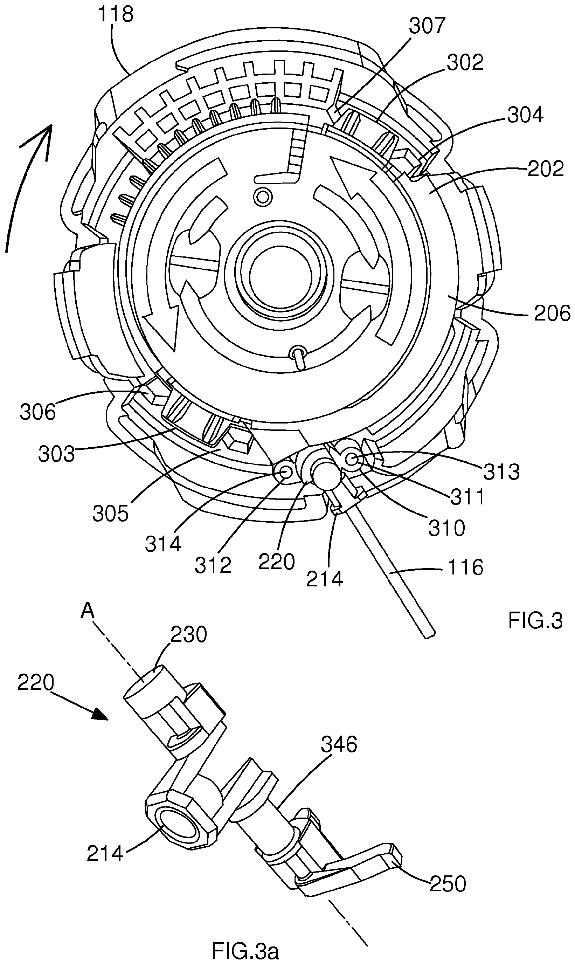

Figure 3 shows a plan view of the cap 118 with the spool accessory 202 installed therein. The spool sleeve 206 comprises engaging tabs 302, 303 which slot between upstanding fingers 304, 305, 306 and 307 of the cap 118. The engaging tabs 302, 303 and the upstanding fingers 304, 305, 306, 307 provide a friction fit between the spool sleeve 206 and the cap 118 and the spool sleeve 206 and the cap 118 are fixed with respect to each other.

The moveable locking mechanism 220 is mounted at the opening 216 with a mounting gripping arm 310. The mounting gripping arm 310 comprises two holes 311, 312 for receiving two mounting pegs 313, 314 of the cap 118. The mounting pegs 314 are integral with the cap 118 and the mounting gripping arm 310 is fixed with respect to the cap 118 when the mounting pegs 313, 314 are located in the mounting holes 311, 312. The mounting gripping arm 310 comprises a pair of resilient arms 342, 344 which gripping arm around a neck portion 346 of the moveable locking mechanism 220. The mounting gripping arm 310 allows the moveable locking mechanism 220 to rotate but also keeps the moveable locking mechanism 220 rotatably coupled to the cap 118. In some embodiments the mounting gripping arm is integral or coupled to the spool sleeve instead. This means that the locking mechanism 220 is part of the spool accessory 202 and the cutting line 116 can be already threaded in the pivoting eyelet 214. This means that the user would not have to thread the cutting line 116 on installation of the spool accessory 202.

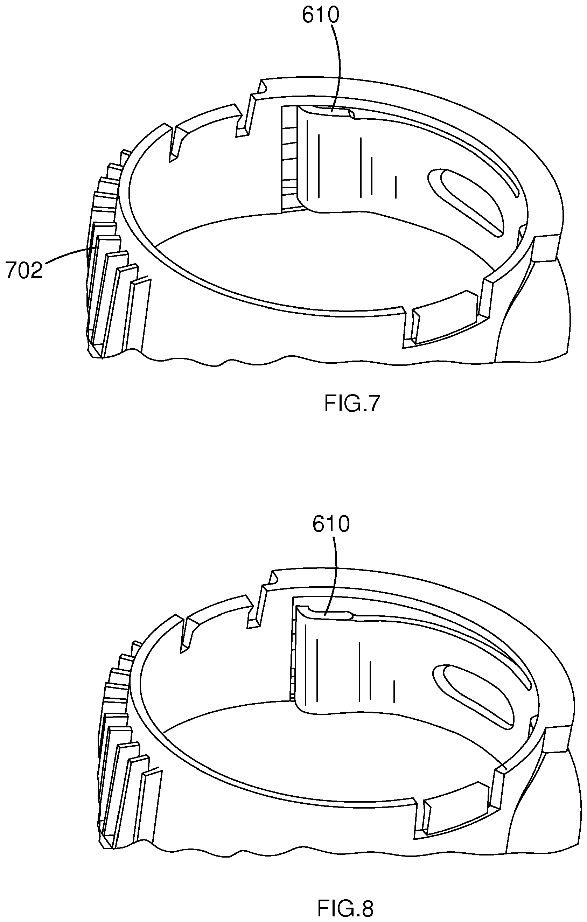

The moveable locking mechanism 220 and moveable eyelet 214 are shown in Figure 3a. The moveable locking mechanism 220 is connected to the pivoting eyelet 214. Figure 3a shows the moveable locking mechanism 220 being integral with the pivoting eyelet 214. In some embodiments (not shown) the pivoting eyelet 214 is a separate element and is mechanically coupled to the moveable locking mechanism 220 such that movement of the pivoting eyelet 214 causes movement of the locking mechanism 220. The pivoting eyelet 214 is mounted towards an upper end 230 of the moveable locking mechanism 220 which is furthest from the base of the cap 118 when the moveable locking mechanism 22 is mounted in the cap 118. In other embodiments the pivoting eyelet 214 can be located at any position along the longitudinal length of the moveable locking mechanism 220. The pivoting eyelet 214 is configured to receive the free end of the cutting line 116. The moveable locking mechanism 220 is generally longitudinal along an axis A and is configured to rotate about the longitudinal axis A. In some embodiments the moveable locking mechanism 220 is configured to pivot about axis A when the pivoting eyelet 214 pivots. The centre of mass of the moveable locking mechanism 220 is aligned with the axis of rotation of the moveable locking mechanism 220. This means that the centre of mass of the moveable locking mechanism 220 does not move with respect to the cap 118 when the moveable locking mechanism 220 rotates. In this way the moveable locking mechanism 220 can be balanced with a fixed counterweight 702 (shown in Figure 7) on the opposite side of the cap 118 to where the moveable locking mechanism 220 is mounted. Aligning the centre of mass of the pivoting eyelet 214 with its axis of rotation also means that there is no turning moment of parts of the moveable locking mechanism 220 itself about the axis of rotation A when the cutting head 102 is rotating.

The neck portion 346 of the moveable locking mechanism 220 is located approximately midway and is configured to mate and couple with the resilient arms 344, 342 of the mounting gripping arm 310.

A locking lever 250 protrudes from the base of the moveable locking mechanism 220. The locking lever 250 is configured mechanically couple and engage with the line feeding mechanism 350.

Returning to Figure 3, an arrow on Figure 3 shows the rotational direction in which the cutting head 102 rotates during operation. Figure 3 shows the pivoting eyelet 214 in a "neutral" position when the cutting head 102 is rotating and no external forces are incident on the free end of the cutting line 116. In this way the centrifugal force on the cutting line 116 urges the cutting line 116 radially outwards from the axis of rotation B of the cutting head 102. In the neutral position the pivoting eyelet 214 is substantially orientated so that the longitudinal axis of pivoting eyelet is tangential to or tangentially parallel to the point where the cutting line is dispensed from the spool 204. This means that the turning moment of cutting line 116 as the cutting line 116 exits the spool eyelet 208 about the pivoting eyelet 214 is minimised.

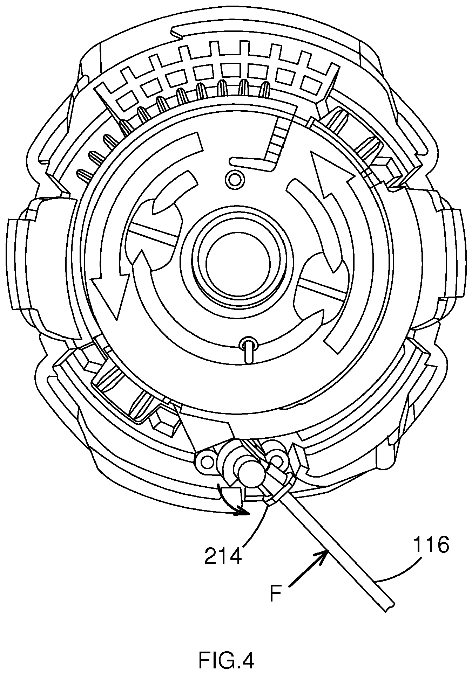

Reference will now be made to Figure 4 which shows the cap 118 with the spool accessory and the pivoting eyelet 214 in another orientation. Figure 4 is the same as Figure 3 except that the pivoting eyelet 214 is in a deflected position. The deflection of the pivoting eyelet 214 can be caused by an external force, e.g. the cutting line 116 hitting a rigid object in the path of the cutting line 116. A force F has been exerted on the free end of the cutting line 116 substantially opposite to the direction of rotation (as shown in Figure 3) and in the plane of the cutting swathe. The force on the cutting line 116 has urged the pivoting eyelet 214 away from the neutral position. In this way the pivoting eyelet 214 has rotated about the pivoting eyelet axis of rotation A anticlockwise. The pivoting eyelet 214 is integral with the moveable locking mechanism 220 and movement of the pivoting eyelet 214 between the neutral position and the deflected position causes the locking lever 250 of the moveable locking mechanism 220 to pivot between a locked position and a release position.

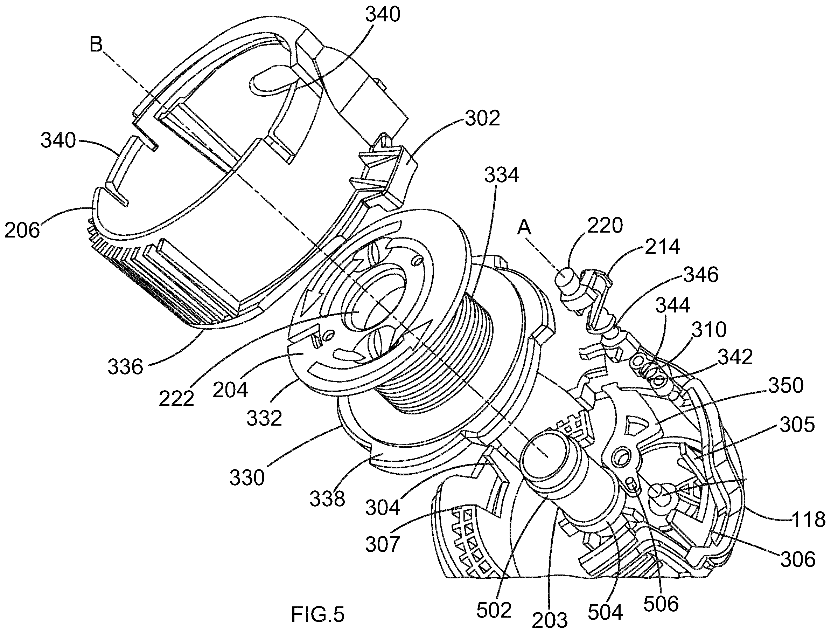

Reference is briefly made to Figure 5 which shows an exploded perspective view of the cap 118 and the spool accessory 202. The spool 204 comprises a lower flange 330 which comprises a larger effective diameter than an upper flange 332. The lower flange 330 can comprise non-circular cross section as shown in Figure 5, or alternatively the lower flange can comprise a generally circular cross section. In some embodiments the spool 204 comprises a central portion 334 which has a plurality of grooves. The grooves aid winding the cutting line 116 onto the central portion 334 of the spool 204. When assembled, the spool sleeve 206 sits over the spool 204 such that a lower lip 336 abuts and rotates against an annular surface 338 on the lower flange 330. The spool sleeve 206 is coupled to the spool 204 by resilient gripping arms 340 of the spool sleeve 206. When the spool sleeve 206 is seated on the spool 204, the resilient gripping arms 340 deflect around the upper flange 330 and snap back to their original position and lock underneath the upper flange 332 of the spool 204, preventing accidental separation of the spool sleeve 206 from the spool 204. The spool 204 comprises a central bore 222 though which the spindle 203 of the cap 118 is threaded when the spool accessory 202 is installed in the cap 118.

Ferrules 502, 504 are located within a central bore 222 of the spool accessory 202 and are configured to axially locate the spool accessory 202 on the spindle 203.

Figure 5 also shows a feeding mechanism 350. The feeding mechanism 350 is configured to cooperate with the spool accessory to automatically feed cutting line 116. When the spool accessory 202 is mounted on the cap 118 the spool accessory 202 is slid on to the spindle 203 and the spindle 203 passes through a bore 222 in the spool 204. The peg 506 coupled to a first pivotal arm located in a track (not shown) in the base of the spool 204. In order to locate the peg 506 in the track, the user can manually rotate the spool 204 using the recess 210. This rotates the spool 204 with respect to the spool sleeve 206 until the peg 506 slots into the track.

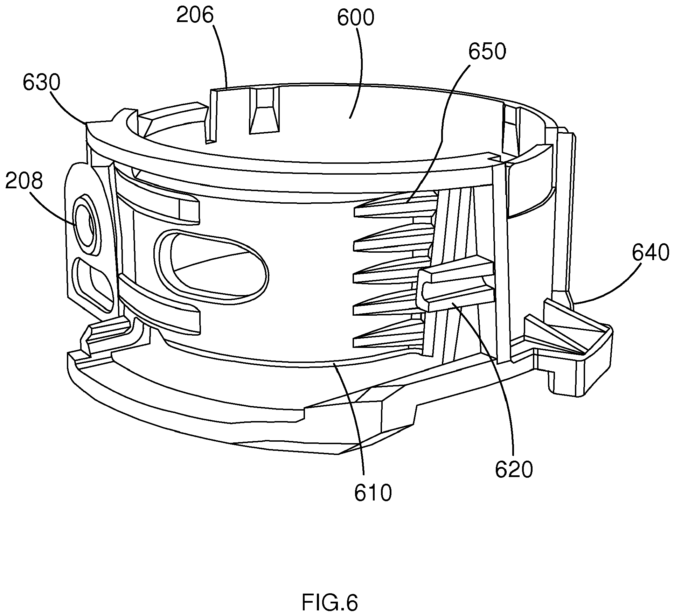

The spool accessory 202 will now be discussed in greater detail with respect to Figure 6. Figure 6 shows a perspective view of the spool sleeve 206. The spool sleeve 206 comprises a generally cylindrical wall 600 with both ends open. The spool sleeve 206 comprises an upper lip 630 and a lower lip portion 336 respectively at the top and bottom edges of the cylindrical wall 600. The upper and lower lips 630, 336 add rigidity to the spool sleeve 206. A gripping arm 610 is mounted to spool sleeve 206. In some embodiments the wall 600 of the spool sleeve 206 comprises a portion of the wall 600 which is not connected to the upper or lower lips 630, 336. This provides a gripping arm 610 which is moveable with respect to the spool sleeve 206. The gripping arm 610 is substantially the same width as the distance between the upper flange 332 and the lower flange 330 of the spool 204. This means that when the gripping arm 610 is in the gripping position, the gripping arm 610 can grip the cutting line 116 wound on the spool 204 are multiple points. This makes the gripping arm 610 grip the cutting line 116 more securely.

In some embodiments the gripping arm 100 comprises a plurality of ribs 650. The ribs 650 can be varied in size, shape and mass and are configured to tune the dynamic response of the gripping arm 610 to a particular rotational speed. In an alternative embodiment there may be one rib or any means suitable for adjusting the mass of the free end of the gripping arm 610.

In some embodiments the gripping arm 610 can be any means suitable for gripping the cutting line 116 against the central portion of the spool 204. The gripping arm 610 can be one or more gripping arms or other means for gripping the cutting line. In some other embodiments the gripping arm 610 can be one or more arms protruding from the upper or lower lips 630, 336 extending towards the lower lip 336 or the upper lip 630 respectively and resiliently biased towards the central portion 334 of the spool 204.

The gripping arm 610 is moveable between a gripping position and a release position. The gripping arm 610 is resiliently biased to the gripping position. In the gripping position, the gripping arm 610 grips the cutting line 116 wound on the central portion of the spool 204. In some embodiments the gripping arm is integral with the spool sleeve 206 and the material of the spool sleeve 206 provides the spring bias of the gripping arm 610. In some embodiments the gripping arm 610 forms a living hinge with the spool sleeve 206.

In some embodiments the gripping arm 610 is made from plastics material, but the gripping arm 610 in other embodiments can be made from other resilient material such as metal. Figure 6 shows the gripping arm 610 in the release position. The gripping arm 610 is in the release position when the spool accessory 202 is rotating. The gripping arm 610 abuts a stop member 620 in the release position. The stop member 620 limits the extent that the gripping arm 610 can move radially outwards with respect to the spool sleeve 206. This means that the stop member 620 prevents the gripping arm 610 from snagging on an inner wall of the cap 118.

In some embodiments the gripping arm 610 abuts the stop member at a predetermined speed. In some embodiments the gripping arm 610 abuts the stop member at a minimum cutting speed. This means that the gripping arm 610 is located at a predetermined position when the cutting head is rotating. The gripping arm 610 will abut the stop member at any speed over the minimum cutting speed. In some embodiments the minimum cutting speed is 3500rpm. This means that the feeding mechanism will not be impeded by the gripping arm 610 during use of the string trimmer 100.

Use of the spool sleeve 206 will now be discussed in reference to Figures 7 and 8. Figures 7 and 8 show a perspective view of the spool sleeve 206 in the release position and the gripping position respectively. Turning to Figure 7, the gripping arm 610 is shown in the release position. The cutting head 102 is rotating and the gripping arm 610 is urged to the periphery of the spool sleeve 206 due to centrifugal force on the gripping arm 610. When the cutting head 102 is rotating the gripping arm 610 is balanced with a counterweight 702. The movement of the gripping arm 610 is limited by the stop member 620 when the cutting head is rotating. Since the gripping arm is in a predetermined position under rotation, the gripping arm 610 can be balanced with a fixed counterweight 702. This means the spool sleeve 206 will always be balanced when the spool accessory 200 is rotated.

Figure 8 is exactly the same as Figure 7 except that the gripping arm 610 is in the gripping position. The gripping arm 610 is resilient and is biased to the gripping position. The gripping arm 610 returns to the gripping position when the spool accessory 202 is not rotated. In the gripping position the gripping arm 610 exerts a force towards the central portion 334 of the spool 204 (not shown in Figure 8 for clarity). The gripping arm 610 urges the cutting line 116 towards the central portion 334 and grips the cutting line 116.

The gripping arm 610 moves in a direction perpendicular to the axis of rotation of the spool accessory 202 (and the cutting head 102). This means that all of the centrifugal force acts against the biasing force of the gripping arm 610. In this way a gripping arm 610 with a maximum gripping force can be optimised against a minimum cutting speed. If the gripping force were in any other direction, then either the speed of the cutting head 102 must be increased to move the gripping arm under centrifugal force or the gripping force of the gripping arm must be reduced.

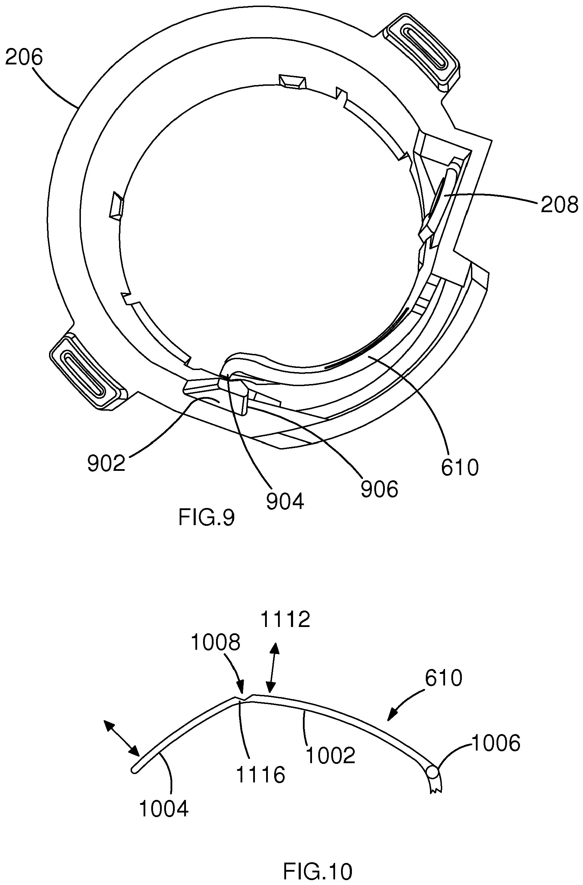

Reference will no be made to Figure 9. Figure 9 shows an underneath plan view of another embodiment of the spool sleeve. The spool sleeve 206 is exactly the same as the spool sleeve as describe in reference to the previous embodiments except that the gripping arm 610 comprises a lip portion 904 for catching in a reciprocal recess 902 in the wall 600 of the spool sleeve 206. The lip portion 902 protrudes radially outward from the gripping arm 610 an the free end thereof. The lip portion 902 abuts against a wall 906 of the recess 902 when the spool sleeve 206 is rotating. This means that the gripping arm 610 is prevented from slipping out and snagging on the cap 118 in conditions when the cutting head 102 undergoes overspeed conditions.

Figure 10 shows a schematic partial side view of the gripping arm according to another embodiment. The spool sleeve 206 is exactly the same as any of the spool sleeves described in with the previous embodiments and has not be shown for the purposes of clarity. The gripping 610 has been modified to comprise a compound arm comprising a plurality of biased elements. In some embodiments the gripping arm comprises a first arm 1002 and a second arm 1004. The first arm 1002 is biased with a living hinge 1006 where the first arm is connected to the spool sleeve. This is similar to the gripping arm 610 as described with respect to the previous embodiments. The second arm 1004 is biased with another living hinge 1008 where the second arm 1004 is connected to the first arm 1002. The living hinge 1008 urges to engaging faces 1110 and 1112 apart and when the second arm 1004 is deflected, the engaging faces 1110 and 1112 abut each other. If the second arm 1004 is deflected any further when the engaging faces 1110, 1112 are in engagement, then the first arm 1002 will also be deflected. This means that the second arms 1004 can substantially move independently from the first arm 1110. This means that the gripping arm 206 can grip multiple layers of the wound cutting line 116. Furthermore the living hinge will not be as susceptible to creep and deformation. This means that the gripping arm 610 can still grip the cutting line 116 even when the spool accessory 202 is near replacement.

In some embodiments the gripping arm 610 is configured to grip the outermost layer of the cutting line 116 when the spool 204 is fully wound with cutting line 116. In some other embodiments the gripping arm 610 is configured to move to grip a plurality of layers of cutting line. Additionally or alternatively the gripping arm 610 is configured to deflect from a position adjacent to the periphery of the spool sleeve 206 to a position adjacent to the central portion 334 of the spool 202. In this way the gripping arm 610 is configured to grip every layer of cutting line 116 wound on the spool 202. The present invention have been discussed with particular reference to the examples illustrated. However it will be appreciated that variations and modifications may be made to the examples described within the scope of the claims.

## Claims

1. A spool accessory (202) for a rotatable cutting head (102) of a vegetation cutting device (100) comprising:
a spool (204) configured to receive a cutting line (116) wound thereon; and
a spool sleeve (206) mounted to the spool (204), the sleeve comprising a gripping arm (610) moveable between a gripping position and a release position,
**characterised in that** the gripping arm (610) is configured to move from the gripping position to the release position when the cutting head (102) rotates, and **further characterised in that** the gripping arm (610) is configured to grip the cutting line (116) wound on the spool (204) when in its gripping position and not to engage the cutting line (116) wound on the spool (204) when in its release position,
wherein the spool sleeve (206) comprises a stop member (620) for limiting the maximum movement of the gripping arm (610) towards the periphery of the spool accessory (202) when the spool accessory is rotating.

2. A spool accessory according to claim 1 wherein the gripping arm (610) is biased to the gripping position.

3. A spool accessory according to claims 1 or 2 wherein the spool sleeve (206) is substantially cylindrical and the gripping arm (610) is integral with a wall of the spool sleeve (206).

4. A spool accessory according to claims 1 to 3 wherein the gripping arm (610) is configured to move in a direction perpendicular to an axis of rotation of the spool (204).

5. A spool accessory according to any of the preceding claims wherein the spool (204) is configured to rotate with respect to the spool sleeve (206).

6. A spool accessory according to any of the preceding claims wherein the spool sleeve (206) comprises a sleeve eyelet (208) for receiving the cutting line (116).

7. A spool accessory according to any of the preceding claims wherein the spool sleeve (206) is configured to be fixed with respect to the rotatable cutting head (102).

8. A spool accessory according to claim 7 wherein the sleeve (206) comprises mounting tabs (302,303) for mounting the spool sleeve (206) to the cutting head (102).

9. A spool accessory according to any of the preceding claims wherein the spool sleeve (206) comprises at least one resilient gripping arm (340) for engaging a reciprocal upper flange (330) on the spool.

10. A spool accessory according to any preceding claim wherein the spool sleeve (206) comprises a spool sleeve counterweight (702) for balancing the gripping arm (610) when the gripping arm abuts the stop member (620).

11. A spool accessory according to claim 10 wherein the spool sleeve (206) comprises a window (212) for viewing the cutting line (116) wound on the spool (204).

12. A spool accessory according to claim 1 wherein the gripping arm (610) is substantially the same width as the distance between an upper and lower flange (332,330) of the spool (204).

13. A cutting head (102) for a vegetation cutting device (100) comprising a spool accessory (202) according to claims 1 to 12.

14. A vegetation cutting device (100) comprising a spool accessory (202) according to claims 1 to 12.

## Patentansprüche

1. Spulenzubehör (202) für einen drehbaren Schneidkopf (102) einer Vorrichtung zum Schneiden von Vegetation (100), umfassend:
eine Spule (204), die eingerichtet ist, um eine darauf gewickelte Schneidleine (116) aufzunehmen; und
eine Spulenhülse (206), die an der Spule (204) montiert ist, wobei die Hülse einen Greifarm (610) umfasst, der zwischen einer Greifposition und einer gelösten Position bewegbar ist,
**dadurch gekennzeichnet, dass** der Greifarm (610) eingerichtet ist, um sich von der Greifposition zu der gelösten Position zu bewegen, wenn der Schneidkopf (102) sich dreht, und **weiter dadurch gekennzeichnet, dass** der Greifarm (610) eingerichtet ist, um die Schneidleine (116), die auf die Spule (204) gewickelt ist, zu greifen, wenn er sich in seiner Greifposition befindet, und nicht mit der Schneidleine (116), die auf die Spule (204) gewickelt ist, einzugreifen, wenn er sich in seiner gelösten Position befindet,
wobei die Spulenhülse (206) ein Anschlagglied (620) zum Begrenzen der maximalen Bewegung des Greifarms (610) hin zu der Peripherie des Spulenzubehörs (202), wenn das Spulenzubehör sich dreht, umfasst.

2. Spulenzubehör nach Anspruch 1, wobei der Greifarm (610) zu der Greifposition hin vorgespannt ist.

3. Spulenzubehör nach Anspruch 1 oder 2, wobei die Spulenhülse (206) im Wesentlichen zylindrisch ist und der Greifarm (610) einstückig mit einer Wand der Spulenhülse (206) ausgeführt ist.

4. Spulenzubehör nach einem der Ansprüche 1 bis 3, wobei der Greifarm (610) eingerichtet ist, um sich in einer Richtung senkrecht zu einer Drehachse der Spule (204) zu bewegen.

5. Spulenzubehör nach einem der vorstehenden Ansprüche, wobei die Spule (204) eingerichtet ist, um sich bezüglich der Spulenhülse (206) zu drehen.

6. Spulenzubehör nach einem der vorstehenden Ansprüche, wobei die Spulenhülse (206) eine Hülsenöse (208) zum Aufnehmen der Schneidleine (116) umfasst.

7. Spulenzubehör nach einem der vorstehenden Ansprüche, wobei die Spulenhülse (206) eingerichtet ist, um bezüglich des drehbaren Schneidkopfs (102) fixiert zu werden.

8. Spulenzubehör nach Anspruch 7, wobei die Hülse (206) Montagelaschen (302, 303) zum Montieren der Spulenhülse (206) an dem Schneidkopf (102) umfasst.

9. Spulenzubehör nach einem der vorstehenden Ansprüche, wobei die Spulenhülse (206) mindestens einen elastischen Greifarm (340) zum Eingreifen mit einem reziproken oberen Flansch (330) an der Spule umfasst.

10. Spulenzubehör nach einem der vorstehenden Ansprüche, wobei die Spulenhülse (206) mindestens ein Spulenhülsengegengewicht (702) umfasst, um den Greifarm (610) auszugleichen, wenn der Greifarm an das Anschlagglied (620) angrenzt.

11. Spulenzubehör nach Anspruch 10, wobei die Spulenhülse (206) ein Fenster (212) zum Betrachten der Schneidlinie (116), die auf die Spule (204) gewickelt ist, umfasst.

12. Spulenzubehör nach Anspruch 1, wobei der Greifarm (610) eine Breite hat, die im Wesentlichen dieselbe ist wie der Abstand zwischen einem oberen und unteren Flansch (332, 330) der Spule (204).

13. Schneidkopf (102) für eine Vorrichtung zum Schneiden von Vegetation (100), umfassend ein Spulenzubehör (202) nach einem der Ansprüche 1 bis 12.

14. Vorrichtung zum Schneiden von Vegetation (100), umfassend ein Spulenzubehör (202) nach einem der Ansprüche 1 bis 12.

## Revendications

1. Accessoire de bobine (202) pour une tête de coupe rotative (102) d'un dispositif de coupe de végétation (100), comprenant :
une bobine (204) configurée pour recevoir une ligne de coupe (116) qui y est enroulée ; et
un manchon de bobine (206) monté sur la bobine (204), le manchon comprenant un bras de fixation (610) mobile entre une position de fixation et une position de libération,
**caractérisé en ce que** le bras de fixation (610) est configuré pour se déplacer de la position de fixation à la position de libération lorsque la tête de coupe (102) tourne, et **caractérisé en outre en ce que** le bras de fixation (610) est configuré pour saisir la ligne de coupe (116) enroulée sur la bobine (204) lorsqu'il se trouve dans sa position de fixation et pour ne pas s'engager sur la ligne de coupe (116) enroulée sur la bobine (204) lorsqu'il se trouve dans sa position de libération,
dans lequel le manchon de bobine (206) comprend un élément d'arrêt (620) pour limiter le mouvement maximal du bras de fixation (610) vers la périphérie de l'accessoire de bobine (202) lorsque l'accessoire de bobine tourne.

2. Accessoire de bobine selon la revendication 1, dans lequel le bras de fixation (610) est pressé dans la position de fixation.

3. Accessoire de bobine selon les revendications 1 ou 2, dans lequel le manchon de bobine (206) est sensiblement cylindrique et le bras de fixation (610) fait partie intégrante d'une paroi du manchon de bobine (206).

4. Accessoire de bobine selon les revendications 1 à 3, dans lequel le bras de fixation (610) est configuré pour se déplacer dans une direction perpendiculaire à un axe de rotation de la bobine (204).

5. Accessoire de bobine selon l'une quelconque des revendications précédentes, dans lequel la bobine (204) est configurée pour tourner par rapport audit manchon de bobine (206).

6. Accessoire de bobine selon l'une quelconque des revendications précédentes, dans lequel le manchon de bobine (206) comprend un oeillet de manchon (208) pour recevoir la ligne de coupe (116).

7. Accessoire de bobine selon l'une quelconque des revendications précédentes, dans lequel le manchon de bobine (206) est configuré pour être fixé par rapport à la tête de coupe rotative (102).

8. Accessoire de bobine selon la revendication 7, dans lequel le manchon (206) comprend des pattes de montage (302, 303) pour monter le manchon de bobine (206) sur la tête de coupe (102).

9. Accessoire de bobine selon l'une quelconque des revendications précédentes, dans lequel le manchon de bobine (206) comprend au moins un bras de fixation élastique (340) pour s'engager sur une bride supérieure réciproque (330) sur la bobine.

10. Accessoire de bobine selon l'une quelconque des revendications précédentes, dans lequel le manchon de bobine (206) comprend un contrepoids (702) pour équilibrer le bras de fixation (610) lorsque le bras de fixation s'aboute sur l'élément d'arrêt (620).

11. Accessoire de bobine selon la revendication 10, dans lequel le manchon de bobine (206) comprend une fenêtre (212) pour observer la ligne de coupe (116) enroulée sur la bobine (204).

12. Accessoire de bobine selon la revendication 1, dans lequel le bras de fixation (610) est sensiblement de la même largeur que la distance entre une bride supérieure et une bride inférieure (332, 330) de la bobine (204).

13. Tête de coupe (102) pour un dispositif de coupe de végétation (100) comprenant un accessoire de bobine (202) selon les revendications 1 à 12.

14. Dispositif de coupe de végétation (100) comprenant un accessoire de coupe (202) selon les revendications 1 à 12.
